Europäisches Patentamt

European Patent Office

Office européen des brevets

(19)

(11) Veröffentlichungsnummer : **0 237 743**
**B1**

(12) **EUROPÄISCHE PATENTSCHRIFT**

(45) Veröffentlichungstag der Patentschrift :
**03.01.90**

(51) Int. Cl.$^5$ : **F 16 C 17/10**

(21) Anmeldenummer : **87101433.8**

(22) Anmeldetag : **03.02.87**

(54) **Radial-Axial-Gleitlager, insbesondere für Automatik-Getriebe von Kraftfahrzeugen.**

(30) Priorität : **14.03.86 DE 3608507**

(43) Veröffentlichungstag der Anmeldung :
**23.09.87 Patentblatt 87/39**

(45) Bekanntmachung des Hinweises auf die Patenterteilung : **03.01.90 Patentblatt 90/01**

(84) Benannte Vertragsstaaten :
**DE FR GB IT SE**

(56) Entgegenhaltungen :
**DE–A– 1 525 284
DE–A– 1 625 626
DE–C–  78 201
DE–C– 850 093
GB–A–  645 734
GB–A– 1 237 773
GB–A– 2 092 239**

(73) Patentinhaber : **FORD-WERKE AKTIENGESELLS-CHAFT
Werk Köln-Niehl Henry-Ford-Strasse Postfach 60 40 02
D-5000 Köln 60 (DE)
DE IT SE
FORD MOTOR COMPANY LIMITED
Eagle Way
Brentwood Essex CM13 3BW (GB)
GB
FORD FRANCE SOCIETE ANONYME
344 Avenue Napoléon Bonaparte B.P. 307
F-92506 Ruell Malmaison Cedex (FR)
FR**

(72) Erfinder : **Premiski Vladimir
Fliederstrasse 23
D-5358 BAM-Willerscheid (DE)**
Erfinder : **Premiski, Claudia
Fliederstrasse 23
D-5358 BAM-Willerscheid (DE)**

(74) Vertreter : **Ritzkowsky, Harald, Dipl.-Ing.
Ford-Werke Aktiengesellschaft Patentabteilung
NH/DRP Henry-Ford-Strasse
D-5000 Köln 60 (DE)**

## Beschreibung

Die Erfindung bezieht sich auf ein Radial-Axial-Gleitlager, insbesondere für Automatik-Getriebe von Kraftfahrzeugen, der in den Oberbegriffen der Patentansprüche 1 und 2 erläuterten Art.

Aus der DE-OS 34 17 703 ist ein Automatik-Getriebe von Kraftfahrzeugen bekannt, bei dem im Bereich zwischen einem mit einer Mittenwelle verbundenen Bauteil und zwischen mit der Abtriebswelle verbundenen Bauteilen eine aufwendige Anordnung von Anlaufscheiben erforderlich ist.

Dieses bekannte Getriebe ist für eine Drehmomentübertragungskapazität ausgelegt, die es ermöglicht, den vorderen Planetenradträger des Simpson-Satzes kostengünstig als Aluminium-Druckgußteil herzustellen, während die Nabe des Ringrades aus Stahl hergestellt ist. Dadurch ergibt sich eine günstige Materialpaarung, die es ermöglicht, die Stahl-Ringradnabe auf dem Aluminium-Planetenradträger laufen zu lassen. Für die axiale Abstützung der Stahl-Ringradnabe ist am Aluminium-Planetenradträger eine Anlaufscheibe über einen Federring festgelegt. Der Aluminium-Planetenradträger stützt sich hierbei über eine in üblicher Weise angeordnete, gegen Verdrehung festgelegte Anlaufscheibe an dem mit der Mittenwelle verbundenen Vorwärtsgang- und der Weggang-Kupplungsträger ab.

Aus der DE-OS 15 25 284 und 16 25 626 sind Gleitlagerhülsen mit beidseitigen Gleitflächen für Radiallasten mit einem Bundteil für beidseitige Axiallasten bekannt.

Aus der GB-A-645 734 ist ein Radial-Gleitlager bekannt, das aus mehreren Hülsenteilen aufgebaut ist, wobei das mittlere Hülsenteil mit beidseitigen Gleitflächen für Radiallasten und inneren und äußeren Bundteilen mit beidseitigen Gleitflächen für Axiallasten versehen ist. Eine Abstützung des Wellenbauteiles in Axialrichtung ist nicht vorgesehen.

Aus der DE-C-78 201 ist ein Radial-Axial-Gleitlager bekannt, das wieder aus mehreren Hülsenteilen besteht, von denen das mittlere Hülsenteil mit beidseitigen Gleitflächen für Radiallasten und einem äußeren Bundteil mit beidseitigen Gleitflächen für Axiallasten versehen ist. Hierbei werden auch axiale Belastungen des Wellenbauteiles über das innere Hülsenteil aufgenommen bzw. übertragen.

Die Aufgabe der Erfindung ist es, eine vereinfachte Lageranordnung für ein verstärktes Automatik-Getriebe von Kraftfahrzeugen zu schaffen, bei dem aus Drehmomentübertragungsgründen auch der vordere Planetenradträger des Simpson-Satzes aus Stahlgefertigt sein muß und dementsprechend die Ringradnabe über eine radiale Lagerbüchse abgestützt werden muß.

Gemäß der Erfindung wird diese Aufgabe gelöst, indem ein Radial-Axial-Gleitlager gemäß den Oberbegriffen der Patentansprüche 1 und 2 die in den Kennzeichenteilen der Patentansprüche 1 und 2 aufgezeigten Merkmale aufweist.

Dadurch, daß nach der einen Ausführungsform das Hülsenteil an seinem einen Ende einen Innenbund zur Aufnahme einer Axiallast und etwa in der Mitte der Länge des Hülsenteiles einen Außenbund zur Aufnahme einer weiteren Axiallast aufweist, wobei der Außenbund durch Ausstanzen und nach Außenbiegen von Lappen gebildet ist, deren Öffnungen im Hülsenteil eine günstige Schmierölversorgung für die Außenlagerung bereitstellen, wird ein sehr kostengünstiges Gleitlager bereitgestellt.

Dadurch, daß nach der anderen Ausführungsform das Hülsenteil an seinem einen Ende mit einem Innenbund zur Aufnahme einer Axiallast und etwa in der Mitte der Länge des Hülsenteiles mit einem Außenbund zur Aufnahme einer weiteren Axiallast versehen ist, wobei der Außenbund durch axiales Stauchen einer nach außen gedrängten Ringfalte gebildet wird, benachbart der am Hülsenteil Öffnungen gestanzt sind, die eine Schmierölversorgung der äußeren Lagerung sicherstellen, wird ein höher belastbareres Gleitlager geschaffen.

Die Erfindung wird anhand zweier in der beiliegenden Zeichnung gezeigten Ausführungsbeispiele näher erläutert.

Es zeigt:

Fig. 1 einen Teilschnitt durch ein Automatik-Getriebe eines Kraftfahrzeuges mit einer Lageranordnung gemäß dem Stand der Technik;

Fig. 2 einen vertikalen Teilschnitt durch den Simpson-Satz eines Automatik-Getriebes eines Kraftfahrzeuges mit der erfindungsgemäßen Lageranordnung;

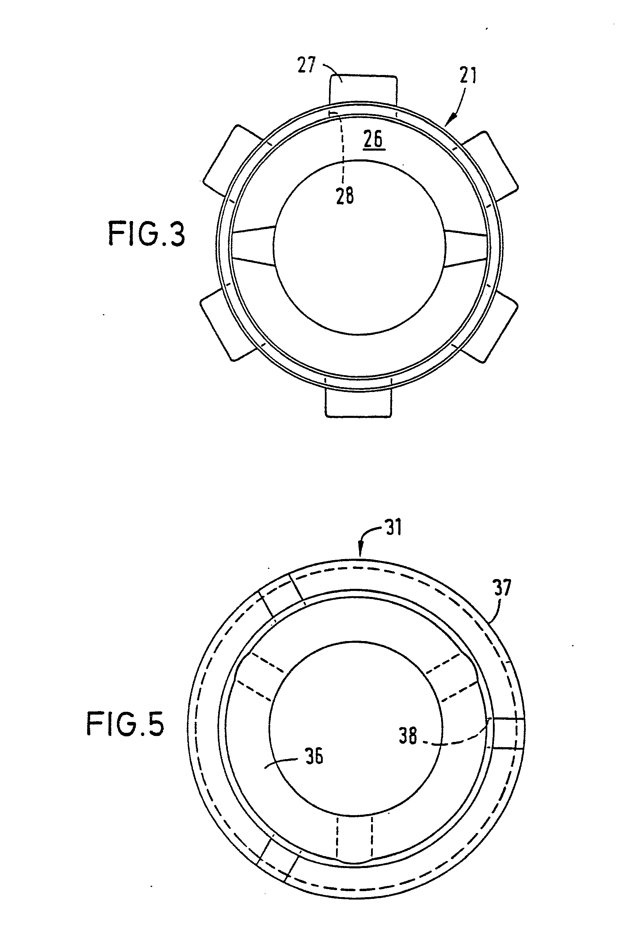

Fig. 3 eine Axialansicht des Radial-Axial-Gleitlagers in Fig. 2

Fig. 4 einen vertikalen Teilschnitt ähnlich Fig. 2 mit einer weiteren Ausführungsform des erfindungsgemäßen Radial-Axial-Gleitlagers und

Fig. 5 eine Axial-Ansicht des Radial-Axial-Gleitlagers in Fig. 4.

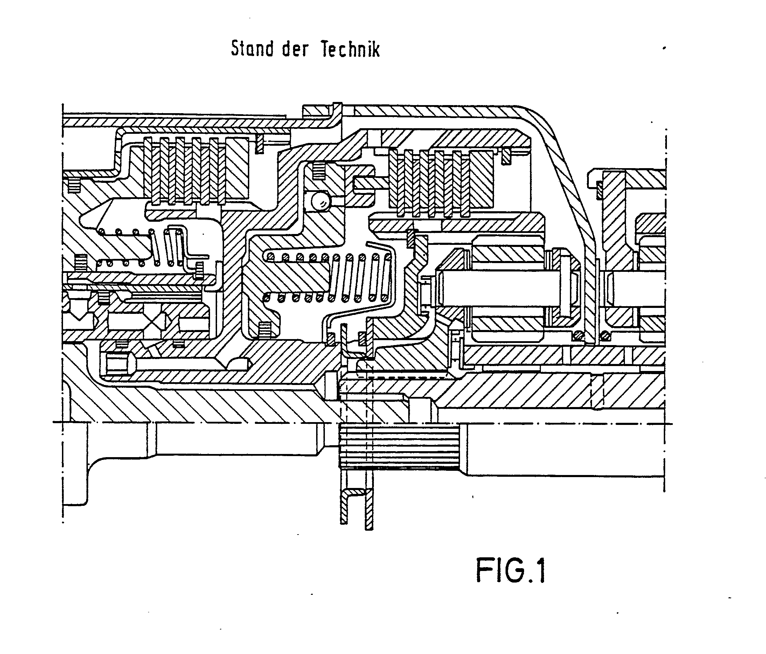

Aus der Fig. 1 ist eine Lageranordnung im Bereich des Simpson-Satzes eines Automatik-Getriebes eines Kraftfahrzeuges gezeigt, wie sie zum derzeitigen Stand der Technik gehört. Hierbei liegt zwischen dem aus Aluminium hergestellten vorderen Planetenradträger und der aus Stahl hergestellten Ringradnabe eine günstige Materialpaarung Stahl auf Aluminium Vor, wodurch auf die Anordnung einer radiale Belastungen aufnehmenden Lagerhülse verzichtet werden konnte. Zur axialen Abstützung der Ringradnabe ist eine durch einen Sprengring gesicherte Anlaufscheibe herkömmlicher Art angeordnet. Am Ende der Nabe des Planetenradträgers ist eine herkömmliche Anlaufscheibe mit einer abgewinkelten Zunge zur Verdrehsicherung angeordnet.

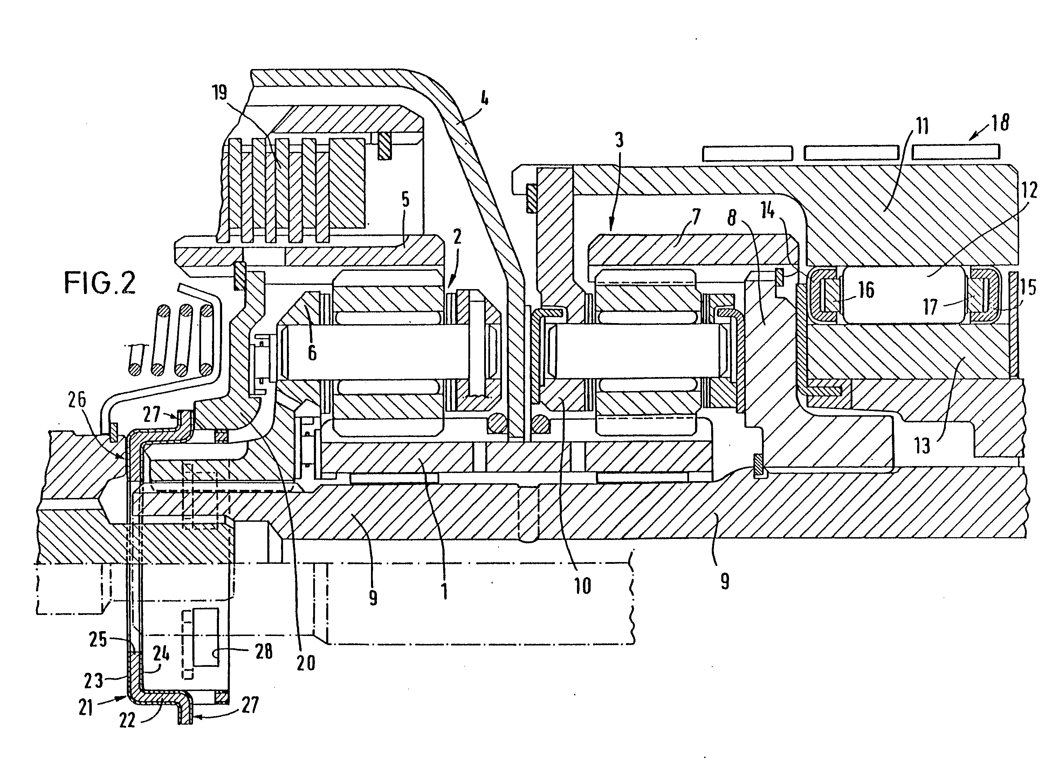

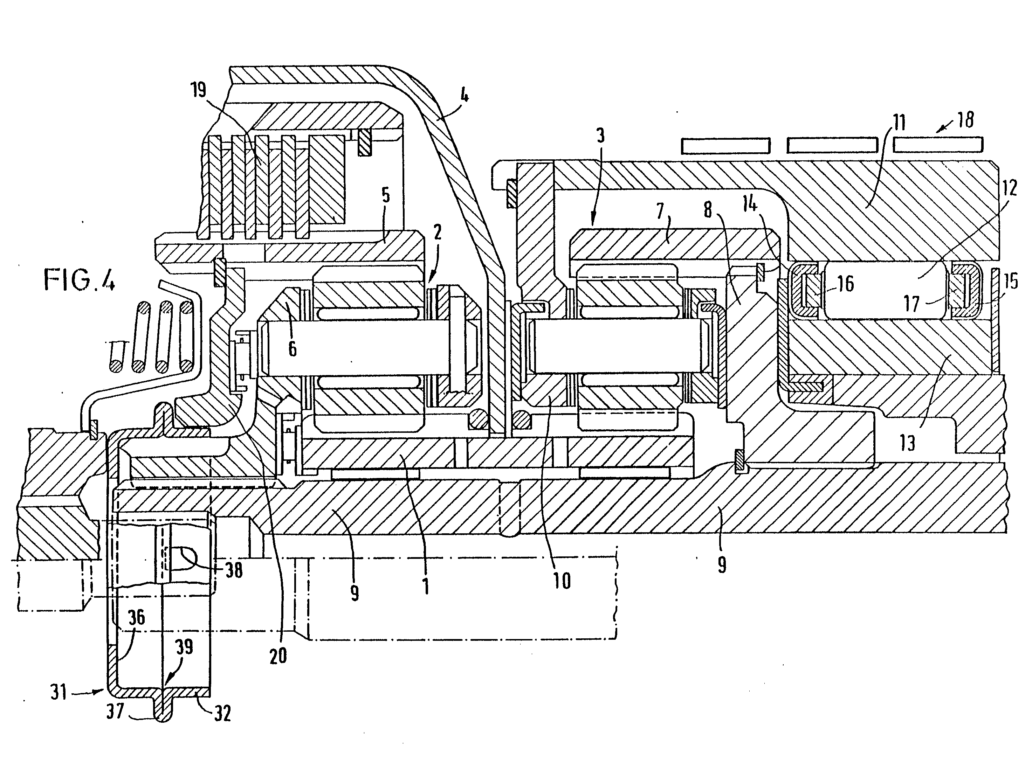

In Fig. 2 ist der in Automatik-Getrieben von Kraftfahrzeugen häufig verwendete Simpson-Satz gezeigt. Dieser besteht aus einem gemeinschaftlichen Sonnenrad 1 für einen vorderen Planetenradsatz 2 und einen hinteren Planetenradsatz 3. Die gemeinsamen Sonnenräder können hierbei über eine Antriebsglocke 4 von einer Vorwärtsgangkupplung (nicht gezeigt) mit Drehmoment beaufschlagt werden und daß Ringrad 5 kann über eine Direktgangkupplung (nicht gezeigt) mit Drehmoment beaufschlagt werden. Der Planetenradträger 6 des vorderen Planetenradsatzes 2 ist hierbei über eine Kerbverzahnung mit der Abtriebswelle 9 verbunden und das Ringrad 7 des hinteren Planetenradsatzes 3 ist über eine Ringradnabe 8 gleichfalls über eine Kerbverzahnung mit der Abtriebswelle 9 verbunden. Der hintere Planetenradträger 10 steht in treibender Verbindung mit einem topfförmigen Bauteil 11, das den Außenlaufring eines Rollen- oder Klemmkörperfreilaufs 12 bildet, dessen Innenlaufring 13 im Getriebegehäuse (nur angedeutet) festgelegt ist.

Zu beiden Seiten des Rollenfreilaufes 12 sind C-förmige Stützringe 14 und 15 angeordnet, die über Schließringe 16 und 17 verstärkt sind. Das topfförmige Bauteil 11 wird von einer Bremseinrichtung 18 umfaßt, die erhebliche Kräfte auf dieses Bauteil auswirken kann, das jedoch durch die besonderen Stützringe 14 und 15 konzentrisch gelagert und gegen Kippen abgestützt ist. Am Ringrad 5 des vorderen Planetenradsatzes 2 greifen die Kupplungslamellen einer Direktgangkupplung 19 an, über die in bestimmten Betriebszuständen das Antriebsdrehmoment eingeleitet wird. Die Ringradnabe 20 ist auf der Nabe des Planetenradträgers 6 unter Zwischenschaltung eines Radial-Axial-Gleitlagers 21 gemäß der Erfindung drehbar gelagert.

Das in Fig. 2 gezeigte Radial-Axial-Gleitlager besteht aus einem Hülsenteil 22, das in bekannter Weise aus einer Platine aus beiderseits mit einer Gleitschicht 23 bzw. 24 versehenen Stützblech 25 durch Tiefziehen zu einer Hülse mit einem Innenbund 26 geformt ist, aus dessen Hülsenteil 22 durch nach außen Stanzen und Biegen ein Außenbund 27 aus einer Vielzahl von radialen Lappen gebildet wird.

Die beim Ausstellen der radialen Lappen 27 im Hülsenteil 22 entstehenden Öffnung 28 leiten in günstiger Weise das Schmieröl auch in den Bereich des Hülsenteiles 22.

Aus der Fig. 4 ist eine weitere Ausführungsform eines erfindungsgemäßen Radial-Axial-Gleitlagers 31 zu entnehmen, deren Hülsenteil 32 in bekannter Weise aus einer Platine aus Gleitmaterial, wie z. B. Bronze durch Tiefziehen zu einer Hülse mit Innenbund 36 geformt wird, worauf das Hülsenteil 32 durch nachfolgendes axiales Stauchen mit einer nach außen gedrängten Ringfalte 37 versehen wird, die einen Außenbund bildet. An am Umfang verteilten Stellen des Hülsenteiles 32 sind Öffnungen 38 vorgesehen, die wieder für eine ausreichende Schmierölzufuhr zu beiden Seiten des Hülsenteiles 32 sorgen.

Die Öffnungen 38 sind mit dem durch axiales Stauchen entstehenden Schlitz 39 unter der Ringplatte 37 verbunden, so daß die Schmierung in allen Radialpositionen des Radial-Axial-Gleitlagers zum Planetenträger 6 gewährleistet ist.

Durch die erfindungemäße Ausbildung eines Radial-Axial-Gleitlagers kann mit einem einzigen Bauteil die axiale Abstützung des vorderen Planetenträgers 6 zur benachbarten Mittelwelle als auch die radiale und axiale Abstützung der Ringradnabe 20 vorgenommen werden.

In beiden Ausführungsformen ist die Herstellung des erfindungsgemäßen Radial-Axial-Gleitlagers verhältnismäßig günstig, da nachfolgend einem herkömmlichen Tiefziehvorganges entweder ein Ausstanzvorgang und Biegevorgang oder aber ein Stauchvorgang nachgeschaltet wird. In beiden Fällen kann mit geringen Herstellungskosten eine einwandfreie Lagerung in diesem schwierigen Bereich eines Automatik-Getriebes erreicht werden.

**Patentansprüche**

1. Radial-Axial-Gleitlager, insbesondere für Automatik-Getriebe von Kraftfahrzeugen mit einem Hülsenteil mit beidseitigen Gleitflächen für Radiallasten und inneren und äußeren Bundteilen mit beidseitigen Gleitflächen für Axiallasten, dadurch gekennzeichnet, daß das Hülsenteil (22) an seinem einen Ende einen Innenbund (26) zur Aufnahme einer Axiallast und etwa in der Mitte der Länge des Hülsenteiles einen Außenbund (27) zur Aufnahme einer weiteren Axiallast aufweist, wobei der Außenbund durch Ausstanzen und Nachaußenbiegen von Lappen (27) gebildet ist, deren Öffnungen (28) im Hülsenteil eine günstige Schmierölversorgung für die Außenlagerung bereitstellen.

2. Radial-Axial-Gleitlager, insbesondere für Automatik-Getriebe von Kraftfahrzeugen mit einem Hülsenteil mit beidseitigen Gleitflächen für Radiallasten und inneren und äußeren Bundteilen mit beidseitigen Gleitflächen für Axiallasten, dadurch gekennzeichnet, daß das Hülsenteil (32) an seinem einen Ende mit einem Innenbund (36) zur Aufnahme einer Axiallast und etwa in der Mitte der Länge des Hülsenteiles mit einem Außenbund (37) zur Aufnahme einer weiteren Axiallast versehen ist, wobei der Außenbund (37) durch axiales Stauchen einer nach außen gedrängten Ringfalte (37) gebildet wird, benachbart der am Hülsenteil (32) Öffnungen (38) gestanzt sind, die eine Schmierölversorgung der äußeren Lagerung sicherstellen.

**Claims**

1. A radial and axial sliding bearing, in particular for automatic transmissions of motor vehicles, having a sleeve portion with sliding surfaces on both sides for radial loads and inner and outer collar portions with sliding surfaces on both sides for axial loads, characterized in that the sleeve portion (22) is provided at one of its ends with an internal collar (26) for receiving an axial load and approximately in the middle of the length of the sleeve portion with an external collar (27) for receiving an additional axial load, the external collar being formed by stamping and after bending out lugs (27), the openings (28) of which ensure a favourable supply of lubricating oil in the sleeve portion for the external mounting.

2. A radial and axial sliding bearing, in particular for automatic transmissions of motor vehicles, having a sleeve portion with sliding surfaces on both sides for radial loads and inner and outer collar portions with sliding surfaces on both sides for axial loads, characterized in that the sleeve portion (32) is provided at one of its ends with an internal collar (36) for receiving an axial load and approximately in the middle of the length of the sleeve portion with an external collar (37) for receiving an additional axial load, the external collar (37) being formed by axially upsetting an outwardly pressed annular fold (37), adjacent which openings (38) which ensure a supply of lubricating oil for the external mounting are stamped on the sleeve portion (32).

**Revendications**

1. Palier lisse pour charges radiales et axiales, en particulier pour transmissions automatiques de véhicules automobiles comportant une partie de coussinet avec surfaces de glissement des deux côtés pour charges radiales et des éléments d'épaulement intérieur et extérieur avec surfaces de glissement des deux côtés pour charges axiales, caractérisé en ce que la partie de coussinet (22) présente à l'une de ses extrémités, un épaulement intérieur (26) destiné à recevoir une charge axiale, et à peu près au milieu de la longueur de la partie de coussinet, un épaulement extérieur (27) destiné à recevoir une autre charge axiale, l'épaulement extérieur étant formé par découpage et pliage vers l'extérieur de languettes (27), dont les orifices (28) pratiqués dans la partie de coussinet favorisent la lubrification du palier extérieur.

2. Palier lisse pour charges radiales et axiales, en particulier pour transmissions automatiques de véhicules automobiles comportant une partie de coussinet avec surfaces de glissement des deux côtés pour charges radiales et des éléments d'épaulement intérieur et extérieur avec surfaces de glissement des deux côtés pour charges axiales, caractérisé en ce que la partie de coussinet (32) est pourvue à l'une de ses extrémités, d'un épaulement intérieur (36) destiné à recevoir une charge axiale, et à peu près au milieu de sa longueur d'un épaulement extérieur (37) destiné à recevoir une autre charge axiale, l'épaulement extérieur (37) étant formé par refoulement axial d'un pli annulaire (37) pressé vers l'extérieur, à proximité duquel des orifices (38) sont découpés dans la partie de coussinet (32), pour assurer une lubrification du palier extérieur.

Stand der Technik

FIG.1

FIG.2

FIG. 4

3

FIG.3

FIG.5